# EUROPEAN PATENT APPLICATION

(11) **EP 2 641 853 A1**
(43) Date of publication of application: **25.09.2013**
(21) Application number: 12001982.3
(22) Date of filing: 21.03.2012
(51) Int. Cl.: B65G 19/14, B65G 65/42

(54) **Load and unload system applied to conveyor with double flow**

(71) Applicant: Bertolini, Jose, Castro (BR); Bertolini, Dionisio, Castro (BR)
(72) Inventor: Bertolini, Jose, Castro (BR); Bertolini, Dionisio, Castro (BR)
(74) Representative: Lorente Berges, Ana

(57) **Abstract**

The present invention concerns a load and unload of grains or seeds for silos, dryers and industrial units, being able to be installed directly in vertical silos (1) and (2) or adapted in the conventional principles of transportation (3) as a group or independently, consisting of pipes with disc-like impellers, the impellers being driven by an endless chain embedded in two horizontal pipes, one above the other and two extremities (5, 6) wherein the chain turns around rollers, the system allowing the discharge of material from both horizontal pipes simultaneously or selectively towards the silos, thanks to an opening in the pipe and slideable walls .

## Description

The patent order PI1000532-3 of the 04/02/2010 will be considered as internal priority of the report that follows, consisting of an innovative system utilized in the transportation, load and unload of grains, fruits or seeds for silos of storage, dryers and industrial units, providing attributes that enlarge the possibilities of load and unload of the products utilizing the same conveyor.

At present, the transporting systems of grains and fruits in more efficient silos, like the conveyors of circular section or *redler* transportations of square or rectangular section, generally act in closed circuit, or cyclic in an only sense among the bases, walls and height of the silos presenting, in strategic points of the assembly, loading places and unload openings of the bulk products. Then, the other systems consist in jugs elevators, transporting threads and conveyor belts, being able to operate together or independent, varying to each disposition utilized or to each need of the rural or industrial producer.

Those types of conveyors are employed to displace the agricultural products from trucks toward the interior of the silos, transportation of the products from one silo to another, conduction for bagging, among others processes, always needing a point of load and another for unload to produce such a movement.

The difficulty found in the conveyors, without distinction, consists of the limitation of the points of load and unload, restricted along the diversity of products to be moved, that is to say, during the transportation or movement of a type of agricultural product, the conveyors do not offer possibilities that a second product is displaced or transported simultaneously without contact with the first one, having to obligatorily wait

to the end of the first proceeding so that it is possible to initiate a new procedure.

The following proposal presents an innovative version in the transportation of agricultural products and industries, seeking to soften and to expand points of load, transportation and unload of bulk products, returning to the efficient and more versatile, transporting assembly.

The description that follows, all to title of not restrictive example, will cause to understand the technology in an objective and clear form, having as an example the designs mentioned listed below:
Figure 1, lateral view of a conventional installation of vertical silos employing directly the double flow transportation system;
Figure 2, lateral view showing a configuration variable applied to the vertical silos, utilizing the double flow transportation system adapted in a conventional conveyor;
Figures 3 and 4, partial lateral reslice views, emphasizing the direction change limits of the draggers and of the motor gears of the internal part;
Figures 5, 6 and 7, lateral and frontal partial isometric reslice views of the double flow transportation system in detail for the loading hopper showing its configuration and operation principle;
Figures 8, 9 and 10, partial isometric and lateral reslice views of the unload double system, showing its configuration and working principles;
Figure 11, partial view of the unload double system, detailing the method that permits the opening and closing of the floodgates belonging to the intervals of the pipes linked to the double flow transportation system;
Figures 12 and 13, partial frontal view in detail and partial frontal view of the unload double system showing the sense of unload of the products of the upper pipe and secondary pipe, respectively;
Figures 14 and 15, illustrations representing one of the conventional systems of transportation employing independently the components belonging to the conveyor with double flow;

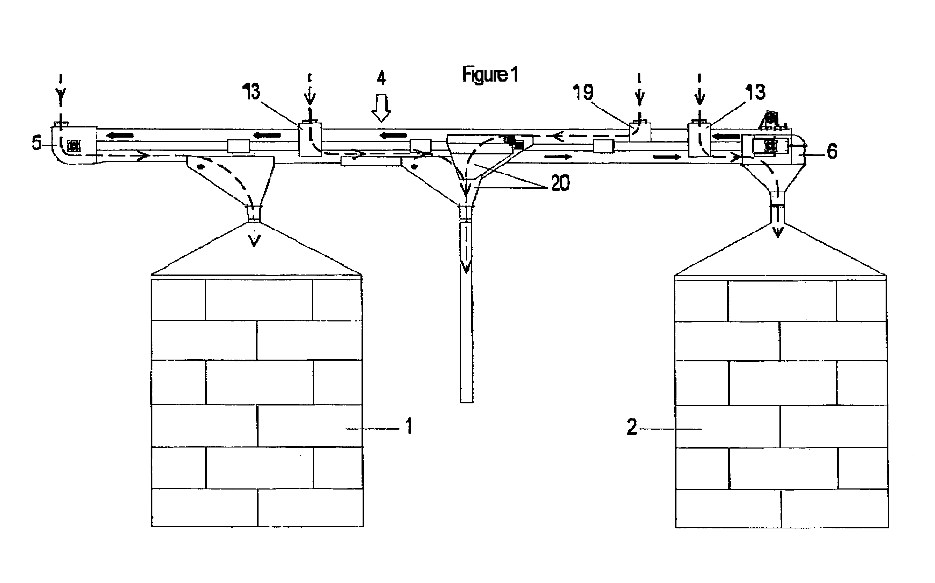

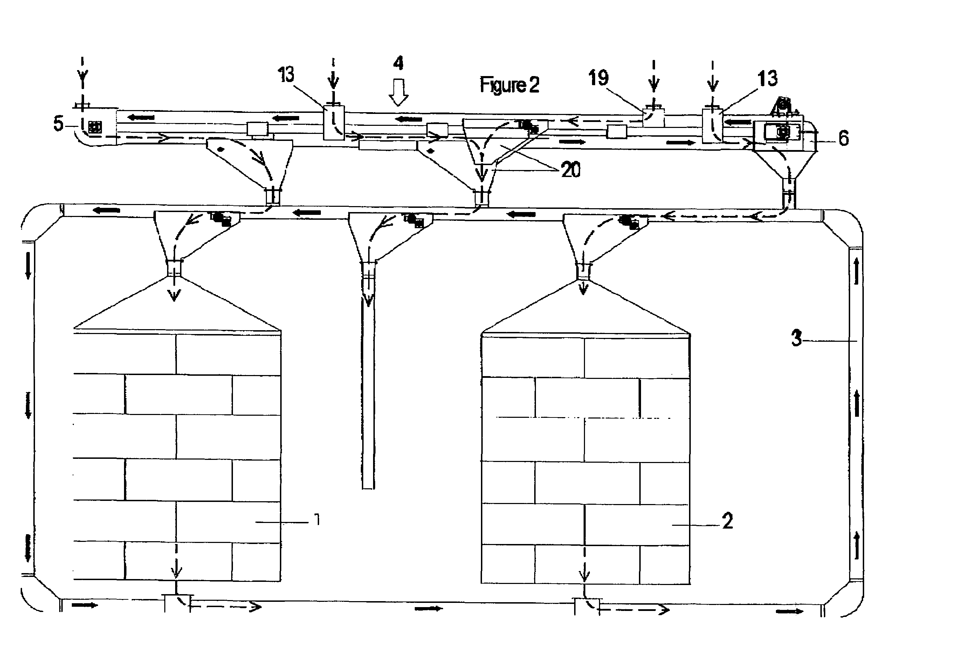

The system of load and unload applied to the conveyor with double flow (4) offers diverse forms of installation, in this case, as an illustrative example only, the disposition can be installed directly in the vertical silos (1) and (2) (figure 1) or adapted in other conventional principles of transportation of grains, fruits or seeds (3) (figure 2), like conveyors of circular section (PI0301803-2 and MU8801337-5), redler type conveyors or any type of conveyor that allows the cluster of the double system of transportation. The ornamental representation of the pointed arrows refers to the entrance and exit of various products that always accompany the sense of movement of the conveyors (represented by dark arrows).

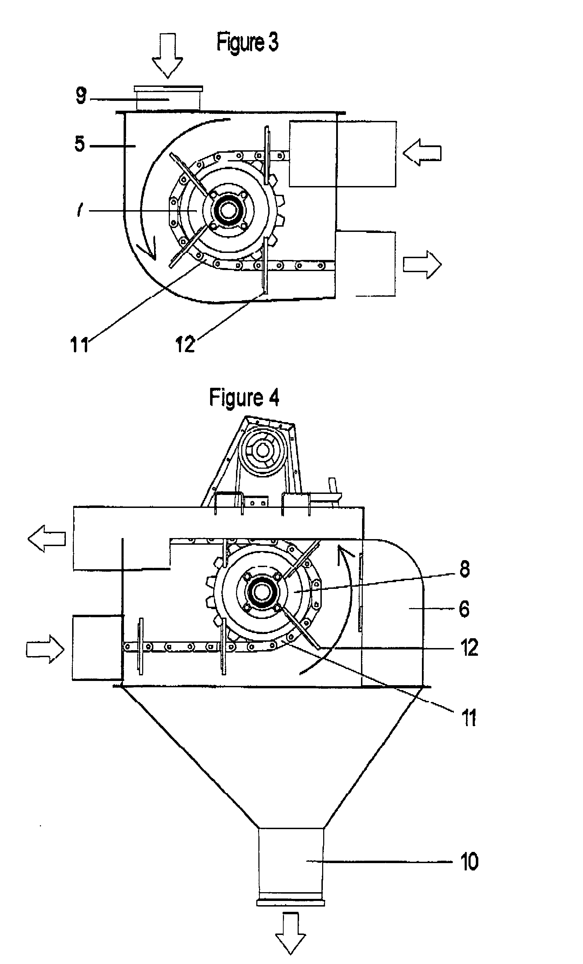

The structural configuration of the loading and unloading system applied to the conveyor with double flow includes direction changes limits (5) and (6) (figures 3 and 4) of the current (11) with draggers (12), generally established in the extremities of the assembly, composed by driving (7) and motor gears(8) and points of load (9) and unload (10) of the bulk products. The function of the direction change limits consists on the movement of the current with draggers integrated in a cyclic process, enabling the entrance, the exit or the displacement of the products of one point to another, according to the need of the process.

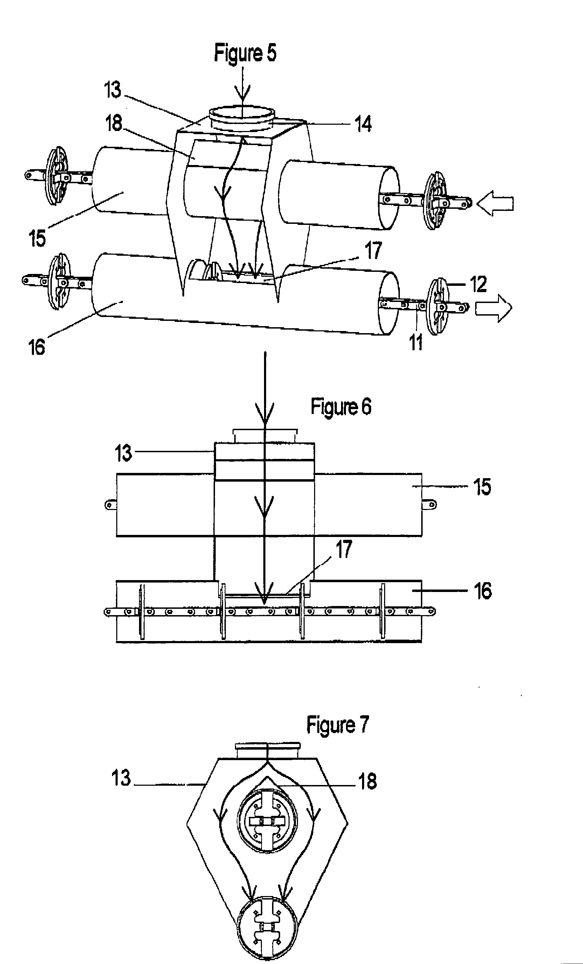

Due to the double flow of the conveyor, a specific type of hopper was developed for reception of products directly on the secondary pipe (16) of the equipment (figures 5, 6 and 7) looking at to expand the odds of utilization of the circuit so that it is possible to transport more than one product simultaneously utilizing the same conveyor. The loading hopper (13), indicated in the figures 5, 6 and 7, can he installed instead of the system that better complies the needs of the process without being limited in barely one hopper. Its principle begins with the entrance of the product by the upper opening (14) of the apparatus through conventional conveyors, transferring the product launched by the sides of the interval of the upper pipe (15) (indicated in the arrows) until reaching the interval of the secondary pipe (16) provided by a channel in its upper part (17), from where the product enters and continues its path to the next point of unload. Also it is presented an inverted "v" plate (18) in the external wall of the interval of the upper pipe (15) as a way to avoid the wear by abrasion of the pipe and to elevate the inclination of the wall, guaranteeing a total unload without occurring a stop or accumulation of products in the high part of the pipe, eliminating thus possible residues.

For reception of products directly in the upper pipe (15), a conventional hopper is employed (19) that does not wrap the secondary pipe (indicated in the figures 1 and 2).

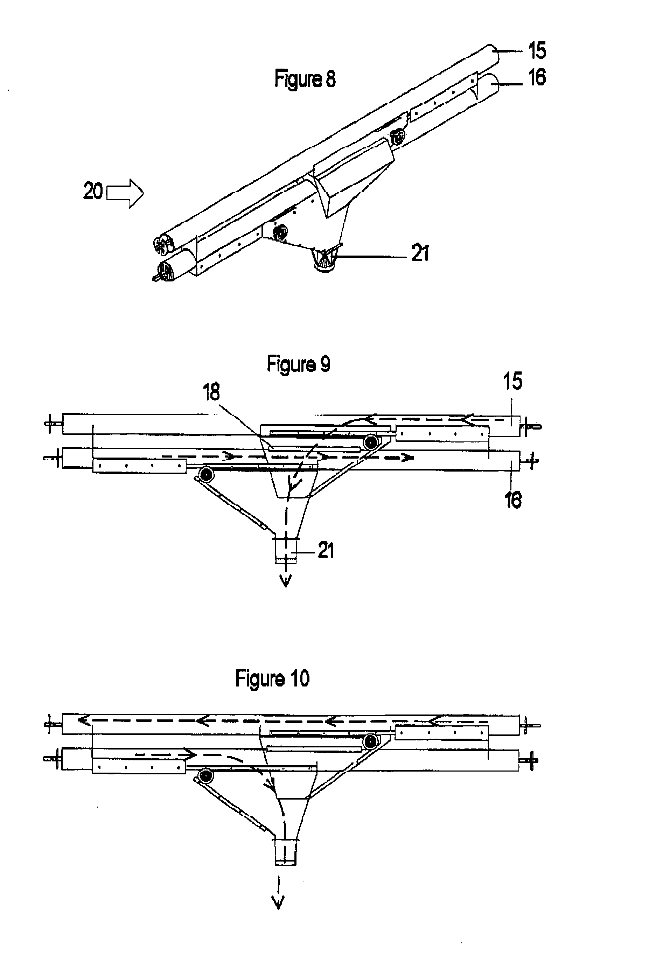

Beyond the loading hopper, il was likewise developed the double unload system (20) (figure 8) that interconnects other intervals of both pipes (15) and (16) to an unload mouth (21) optionally adapted directly in the silos, in a second conventional transporting (3), bulk expedition or, even, in an industrial equipment. The quantity of double unload systems in the conveyor does not present limitations, being able to vary according to the need of the project.

The working procedure of the double unload system, illustrated in figure 9, occurs when is necessary the transfer or unloads of some type of product without limiting the process of other products, that is to say, during the transportation of certain grain or seed in the secondary pipe (16) (indicated in the arrows), it is possible to unload another type of grain transported in the upper pipe (15) impeding the contact of both products or vice-versa (figure 10), taking advantage of the same system of current with conveyor draggers for various possibilities of employment, seeking to soften the system as an all.

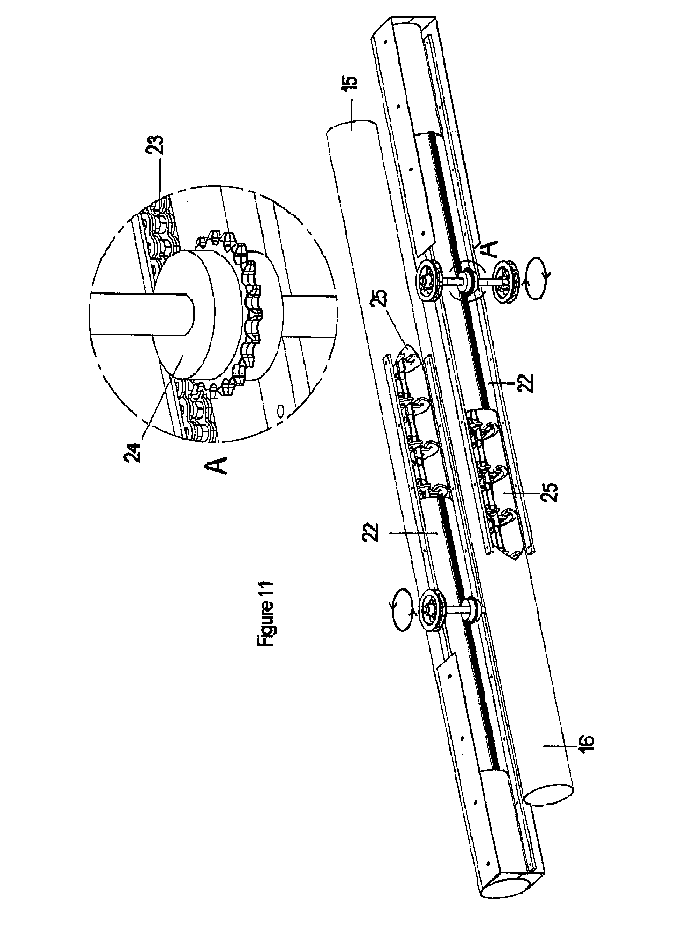

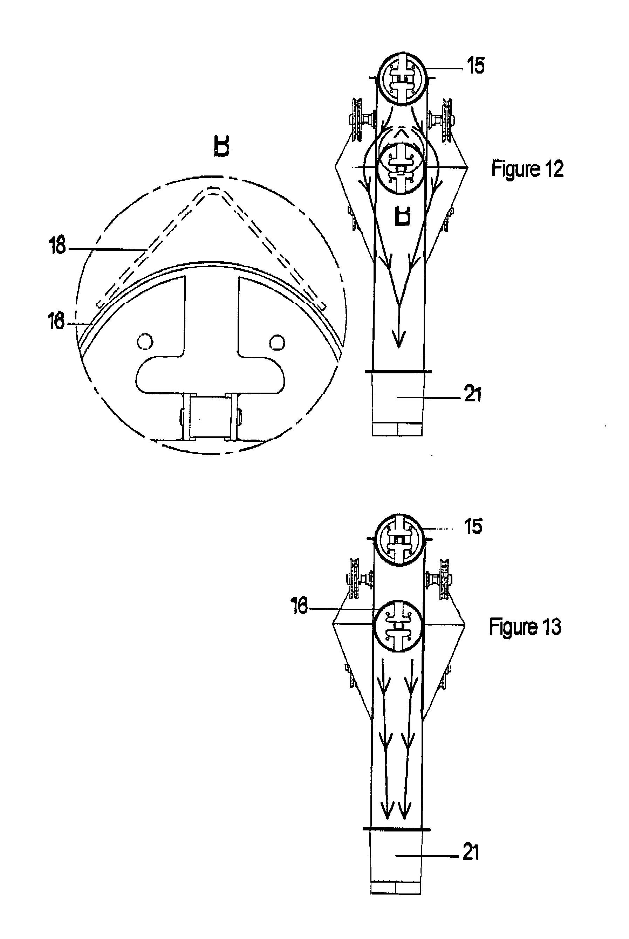

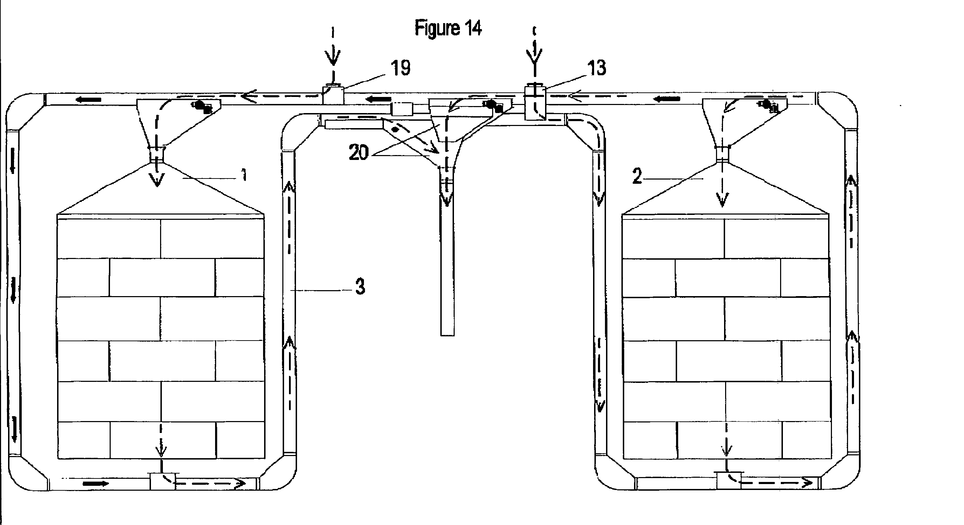

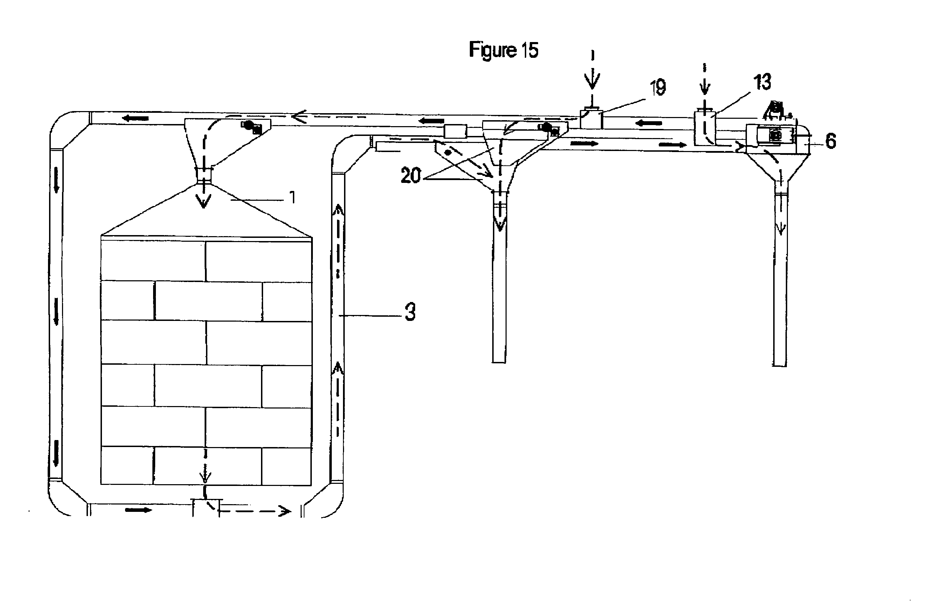

Internally, the double unload system (figure 11) counts with plates in the shape of drawers or floodgates (22) arranged in the lower periphery of both intervals of the pipes (15) and (16), acquiring movement through a zipper (23) and gears (24) connected with the principle of pulleys and conventional electric motors. The function of the floodgates is to free the product for unload and to control its flow through the adjustment of the opening of the conducts or channels (25) produced directly in the intervals of the pipes (15) and (16). In the external upper section of the interval of the secondary pipe (16) it is introduced in the same form an inverted "v" plate (18) (indicated in the figure 9 and in detail in the figure 12) with an identical function of inverted "v" plate related to the hopper (13), avoiding the wear of the pipe and improving the unload of the products. Upon arising the need of unload of the grains, fruits or seeds transported in the upper pipe (15), its floodgate is driven, producing that the product drains along the external sides of the interval of the secondary pipe (16), exactly on the surface of the plate (18) linked (indicated in the arrows of the figure 12) until reaching the mouth of unload (21) responsible for directing the product for storage or charge. During this process, a second different product can continue through the secondary pipe (16) for storage or any another end In a contrary situation, the contained product in the upper pipe (15) continues toward its destiny, as soon as the product of the interior of the secondary pipe (16) is drained toward the mouth of unload (21) (shown in the figure 13) through the operation and opening of its above-mentioned floodgate. The main components belonging to the double flow transportation system, as the motor direction change limit (6), the loading hopper (13) and double unload (20), enable its independent installation from the conventional principles of transportation of grains, fruits or seeds (3), preferentially to the MU8801337-5 (figures 14 and 15) through simple adaptations. In this case particularly, the limit of change is utilized of motor direction (6) only as an illustrative example, but, depending on the project to be developed, it is possible to utilize the driving direction change limit (5), seeking to soften the possibilities of application of the equipment and to attend the specific needs of each user.

Of this conclusive form, the advantages related to this configuration related to the conventional systems of agricultural transportation determine the load points increase and unload of the products reducing the busy time with movement, loads or unload, enabling the process of two or more types of different products in the same system without risks of contamination or mixes of such products and its installation does not require large adaptations to the usual conveyors, transforming this invention in a highly influential instrument for the agricultural segment.

## Claims

1. "LOAD AND UNLOAD SYSTEM APPLIED TO THE DOUBLE FLOW CONVEYOR", permitting the simultaneous transportation of two or more different products through various available points of load and unload for silos of storage, dryers or equipment of industrial process, **CHARACTERIZED by** the conveyor with double flow (4) composed by driving direction change limits (5) and motor (6), loading hoppers (13) and double unload systems (20).

2. "LOAD AND UNLOAD SYSTEM APPLIED TO THE DOUBLE FLOW CONVEYOR", **CHARACTERIZED by** the direct Installation of the double flow transporting system (4) in vertical silos (1) and (2) or joint in conventional principles of transportation (3), preferentially circular section conveyors or redler type conveyors.

3. "LOAD AND UNLOAD SYSTEM APPLIED TO THE DOUBLE FLOW CONVEYOR", according to the demand 1, **CHARACTERIZED by** driving direction change limits (5) and motor (6) generally established in the extremities of the assembly, composed by driving (7) and motor gears(8) and points of load (9) and unload (10) respectively of the bulk products.

4. "LOAD AND UNLOAD SYSTEM APPLIED TO THE DOUBLE FLOW CONVEYOR", according to the demand 1, **CHARACTERIZED by** the circumstance of that the loading hopper (13) is composed by an upper opening (14), interval of the upper pipe (15) provided of an inverted "v" plate (18) in its external wall and interval nf the secondary pipe (16) with channel (17) for the entrance of the product in bulk.

5. "LOAD AND UNLOAD SYSTEM APPLIED TO THE DOUBLE FLOW CONVEYOR", according to the demand 1 and **CHARACTERIZED by** the circumstance of that the double unload system (20) interconnects intervals of the pipes (15) and (16) to an unload mouth (21).

6. "LOAD AND UNLOAD SYSTEM APPLIED TO THE DOUBLE FLOW CONVEYOR", as described in the demand 5 and **CHARACTERIZED by** the double unload system (20) is composed by plates in the shape of drawers or floodgates (22) arranged in the lower periphery of both intervals of the pipes (15) and (16) acquiring movement by the method of zipper (23) and gears (24), conducts or channels (25) produced directly in the intervals of the pipes (15) and (16) inverted "v" plate (18) linked to the external section of the interval of the secondary pipe (16).

7. "LOAD AND UNLOAD SYSTEM APPLIED TO THE DOUBLE FLOW CONVEYOR", **CHARACTERIZED by** the independent installation of the direction change limits (6) or driving motor (5), loading hopper (13) and the double unload (20) of the conventional principles of transportation of grains, fruits or seeds (3).

## Amended claims

### Amended claims in accordance with Rule 137(2) EPC.

**1.** Load and unload system applied to a double flow conveyor having an upper pipe (15) and a lower pipe (16), allowing for the simultaneous transportation of two or more different products through various loading and unloading points for silos of storage, dryers or equipment of industrial process, **characterized in that** the double flow conveyor (4) comprises driving (6) and dragged (5) direction change limits, loading hoppers (13) and double unload systems (20), where the loading hopper (13) comprises an upper opening (14) connecting with a section of the upper pipe (15) having an inverted "v" plate (18) on its external wall allowing for the product to fall along said "v" plate (18) and upper pipe (16), and with a section of the secondary pipe (16) having an opening (17) for the entrance of the product in bulk, and where the double unload system (20) comprises plates in the shape of drawers or floodgates (22) arranged in the lower periphery of both sections of the pipes (15) and (16) which are driven by means nf a zipper (23) and gears (24), conducts or channels (26) produced directly in the sections of the pipes (15) and (16) inverted "v" plate (18) linked to the external Part of the section of the secondary pipe (16).

**2.** Load and unload system applied to a double flow conveyor according to claim 1, **characterized by** the direct installation of the double flow transporting system (4) in vertical silos (1) and (2) or joint in conventional means of transportation (3).

**3.** Load and unload system applied to a double flow conveyor according to claim 1, **characterized by** having driving (6) and dragged (6) direction change limits provided at the ends of the assembly, comprising dragged (7) and driving gears (8) and loading (9) and unloading (10) points of the bulk products.

**4.** Load and unload system applied to a double flow conveyor according to claim 1, **characterized by** the independent installation of the driving (6) or dragged (5) direction change limits, loading hopper (13) and the double unload (20) of the conventional means of transportation of grains, fruits or seeds (3).
